# EUROPEAN PATENT APPLICATION

(11) **EP 3 151 575 A1**
(43) Date of publication of application: **05.04.2017**
(21) Application number: 15800287.3
(22) Date of filing: 28.05.2015
(51) Int. Cl.: H04N 21/43, H04N 21/431, H04N 21/45

(54) **METHOD FOR DISPLAYING OBJECT ON DEVICE AND DEVICE THEREOF**

(30) Priority: 28.05.2014 KR 20140064568
(71) Applicant: Samsung Electronics Co., Ltd., Suwon-si, Gyeonggi-do 443-742 (KR)
(72) Inventor: KIM, Yo-han, Suwon-si Gyeonggi-do 442-703 (KR); LEE, Jae-jun, Suwon-si Gyeonggi-do 443-773 (KR); JOO, Yu-sung, Yongin-si Gyeonggi-do 448-130 (KR); RYU, Sung-uk, Suwon-si Gyeonggi-do 442-835 (KR); CHUNG, Hyun-kwon, Seoul 156-836 (KR)
(74) Representative: HGF Limited
(86) International application number: PCT/KR2015/005355
(87) International publication number: WO 2015/183010

(57) **Abstract**

Disclosed is a method of displaying an object on a device. The method includes specifying a first object displayed on a screen from among a plurality of objects including order information, displaying, on the screen, a second object corresponding to an object information area selected from among a plurality of object information areas indicating the plurality of objects displayed together with the first object based on the order information, and changing an object displayed on the screen to the specified first object when a return input for the specified first object is received.

## Description

### [TECHNICAL FIELD]

The present invention relates to a method of displaying an object on a device, a device for displaying an object, and a recording medium having stored thereon a program for executing the method of displaying an object.

### [BACKGROUND ART]

With the development of communication technologies and display technologies, content has been digitized and displayed in electronic devices. Recently, a variety of printed media have been digitized and provided to users.

For example, a user may receive digitized content of such media as textbooks, magazines, and newspapers through an electronic device with a display device.

Various types of user interfaces for providing digital content to users are being developed. In particular, as various types of user inputs may be recognized by devices, research is being actively conducted on a user interface for combining various types of user inputs to provide digital content to a user.

### [DETAILED DESCRIPTION OF THE INVENTION]

### [TECHNICAL PROBLEM]

The present invention relates to a method and apparatus for providing a user with information regarding objects included in digital content when the digital content is displayed through a device.

### [TECHNICAL SOLUTION]

Disclosed is a method of displaying an object on a device. The method includes specifying a first object displayed on a screen from among a plurality of objects including order information, displaying, on the screen, a second object corresponding to an object information area selected from among a plurality of object information areas indicating the plurality of objects displayed together with the first object based on the order information, and changing an object displayed on the screen to the specified first object when a return input for the specified first object is received.

### [DESCRIPTION OF THE DRAWINGS]

FIG. 1 is a conceptual view for describing a method of displaying an object on a device according to an embodiment.
FIG. 2 is a flowchart for describing a method of a device displaying an object according to an embodiment.
FIGS. 3A and 3B are diagrams for describing a method of a device displaying a plurality of object information areas on a screen according to an embodiment.
FIGS. 4A and 4B are diagrams for describing a method of a device removing a plurality of object information areas displayed on a screen according to an embodiment.
FIG. 5 is a diagram for describing a method of a device displaying additional information regarding an object on a screen according to an embodiment.
FIG. 6A shows an object information area that is displayed together with a page on a screen when a digital book is displayed on a device according to an embodiment.
FIG. 6B shows an object information area that is displayed together with a photo on a screen when a gallery application is running on a device according to an embodiment.
FIG. 6C shows an object information area that is displayed together with a webpage on a screen when the webpage is displayed on a device according to an embodiment.
FIG. 7A shows an object information area that is displayed together with a page on a screen when a digital book is displayed on a device according to another embodiment.
FIG. 7B shows an object information area that is displayed together with a photo on a screen when a gallery application is running on a device according to another embodiment.
FIG. 7C shows an object information area that is displayed together with a webpage on a screen when the webpage is displayed on a device according to an embodiment.
FIG. 8 is a flowchart for describing a method of a device determining a range of an object information area displayed on a screen according to an embodiment.
FIG. 9 is a diagram for describing a method of a device displaying a plurality of object information areas on the basis of a hovering input received by the device according to an embodiment.
FIG. 10 is a diagram for describing a method of a device determining a position at which a plurality of object information areas are displayed on the basis of a user input according to an embodiment.
FIG. 11 is a flowchart for describing a method of a device confirming a first object displayed on a screen and determine a position at which a plurality of object information areas are displayed according to an embodiment.
FIG. 12 is a diagram for describing in detail a method of a device confirming a first object displayed on a screen and determine a position at which a plurality of object information areas are displayed according to an embodiment.
FIG. 13 is a flowchart for describing a method of a device displaying additional information corresponding to an object according to an embodiment.
FIG. 14 is a diagram for describing in detail a method of a device displaying additional information corresponding to an object according to an embodiment.
FIG. 15 is a diagram for describing in detail a method of a device displaying additional information corresponding to an object according to another embodiment.
FIG. 16 is a diagram for describing in detail a method of a device adding new information to additional information corresponding to an object according to still another embodiment.
FIG. 17 is a flowchart for describing a method of a device displaying a specified object on a screen again according to an embodiment.
FIG. 18 is a diagram for describing in detail a method of a device displaying a specified object on a screen again according to an embodiment.
FIGS. 19 and 20 are block diagrams of a device for displaying an object according to an embodiment.

### [BEST MODE]

A method of a device displaying an object according to an embodiment includes specifying a first object displayed on a screen from among a plurality of objects including order information; displaying, on the screen, a second object corresponding to an object information area selected from among a plurality of object information areas indicating the plurality of objects displayed together with the first object based on the order information; and changing an object displayed on the screen to the specified first object when a return input for the specified first object is received.

The method according to an embodiment further includes sequentially displaying the plurality of object information areas indicating the plurality of objects based on the order information.

Among the plurality of object information areas, an object information area indicating an object having order information with a higher rank than that of the first object is displayed at a first side of the screen, and an object information area indicating an object having order information with a lower rank than that of the first object is displayed at a second side of the screen.

The number of object information areas displayed on the screen is determined based on a length of a drag input received from a user.

The method according to an embodiment further includes receiving a sorting input for selecting any one piece of the order information of the objects; and displaying the selected order information in the plurality of object information areas based on the received sorting input.

The displaying includes displaying the order information of the plurality of objects based on hierarchical information between the plurality of objects included in the order information.

The plurality of objects correspond to digital content including a plurality of pages.

The order information is displayed in an image in which each of the plurality of pages is folded at one side.

The method according to an embodiment further includes determining a side at which a ratio of at least one of an image, text, and a video to the screen on which the first object is displayed is less than or equal to a predetermined value; and displaying the plurality of object information areas indicating the plurality of objects at the determined side.

The specifying of a first object includes creating marking information for the first object when a first input is received for a predetermined time or longer, and the displaying of a second object includes receiving a second input for selecting any one of the plurality of object information areas indicating the plurality of objects together with the first input received for the predetermined time or longer and displaying a selected second object based on the received second input.

A device for displaying an object according to an embodiment includes a controller configured to specify a first object displayed on a screen from among a plurality of objects including order information and select any one object information area from among a plurality of object information areas indicating the plurality of objects displayed together with the first object based on the order information, a display configured to display a second object corresponding to the selected object information area, and an input/output unit configured to receive a return input for the specified first object, wherein the controller changes an object displayed on the screen to the specified first object when the return input is received.

The display sequentially displays the plurality of object information areas indicating the plurality of objects based on the order information.

The display displays an object information area indicating an object having order information with a higher rank than that of the first object at a first side of the screen and displays an object information area indicating an object having order information with a lower rank than that of the first object at a second side of the screen.

The number of object information areas displayed on the screen is determined based on a length of a drag input received from a user.

The input/output unit receives a sorting input for selecting any one piece of the order information of the objects, and the display displays the order information of the plurality of objects in the plurality of object information areas based on the received sorting input.

The display displays the order information of the plurality of objects based on hierarchical information between the plurality of objects included in the order information.

The plurality of objects correspond to digital content including a plurality of pages.

The order information is displayed in an image in which each of the plurality of pages is folded at one side.

The controller determines a side at which a ratio of at least one of an image, text, and a video to the screen on which the first object is displayed is less than or equal to a predetermined value, and the display displays the plurality of object information areas at the determined side.

The controller creates marking information for the first object when a first input is received for a predetermined time or longer, the input/output unit receives a second input for selecting any one of the plurality of object information areas together with the first input received for the predetermined time or longer, and the display displays a selected second object based on the received second input.

### [MODE OF THE INVENTION]

The terms used herein will be briefly explained, and the present invention will be explained in detail.

The terms used herein are selected from the terms commonly used at present with considering functions in the present invention, but this may change according to the intention of those skilled in the art or court decisions, or appearance of new technologies. Also, in some cases, there are terms selected by the applicant's own decision, and in such cases, the meanings will be explained in detail in corresponding parts of the detailed description. Accordingly, the terms used herein should be defined, not as simple names, but based on the meanings of the terms and the contents of the present invention as a whole.

It will be understood that the terms "comprises" and/or "comprising," when used in this specification, do not preclude the presence or addition of one or more other features unless otherwise described. Also, the terms such as "unit" and "module" indicate a unit for processing at least one function or operation, and this unit may be implemented by hardware or software, or combination of hardware and software.

Hereinafter, exemplary embodiments of the present invention will be described in detail with reference to the accompanying drawings so that they can be easily practiced by those skilled in the art. However, the present invention may, be embodied in many different forms and should not be construed as being limited to the embodiments set forth herein. In order to clearly explain the present invention, irrelevant parts in drawings are omitted, and like reference numerals refer to like elements throughout.

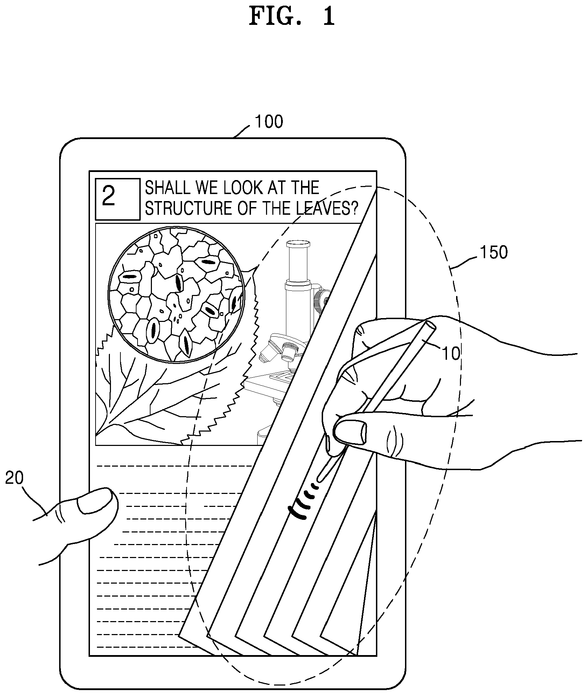

FIG. 1 is a conceptual view for describing a method of displaying an object on a device 100 according to an embodiment.

The device 100 displays digital content including at least one of text, an image, and a video on a screen. For example, the device 100 may display a digital book in which various types of content such as text, an image, and a video are combined on a screen.

The device 100 according to an embodiment displays the digital content displayed on the screen on the basis of order information. For example, the device 100 may display objects included in the digital content on the basis of the order information. Here, an object refers to a unit of content that constitutes digital content and is independently displayable on a screen. Also, the order information includes information regarding an order in which the objects are displayed on the screen of the device 100.

For example, when a digital book is displayed on the screen of the device 100, the device 100 may display objects included in the digital book on the basis of the order information. In the digital book, each object may be a page constituting the digital book. According to a user's settings, the device 100 may sort pages included in the digital book in ascending order or descending order and display the sorted pages on the basis of page numbers of the pages included in the digital book.

Meanwhile, when the device 100 displays any one of a plurality of objects constituting digital content on the screen, the device 100 may display a plurality of object information areas 150 indicating the plurality of objects on the screen. For example, when an n^{th} page of the digital book is displayed on the screen of the device 100, the device 100 may also display page information areas indicating the other pages on the screen. The device 100 may provide a user with information regarding objects other than an object currently displayed on the screen by displaying the plurality of object information areas 150 indicating the plurality of objects on the screen.

The device 100 according to an embodiment may display additional information regarding the plurality of objects together with the plurality of object information areas. Here, the additional information may include descriptions of features of the object and records of the object by the user. For example, the descriptions of features of the object may include a thumbnail image of the object, a title of the object, a summary of information included in the object, or the like. The records of the object by the user may include a memo or a bookmark record that is written about the object by the user. However, the descriptions of features of the object and the records of the object by the user are just examples of the additional information, and a variety of information for identifying the plurality of objects may be included in the additional information.

Meanwhile, the device 100 detects at least one user input 10 or 20. The at least one or more user inputs 10 and 20 may be different types of input information. Referring to FIG. 1, the device 100 may detect a hovering input 10 and a touch input 20.

Also, the device 100 performs an operation corresponding to the detected at least one user input 10 or 20. A database stored outside or inside the device 100 includes information regarding the type of a user input that is detectable by the device 100 and an operation of the device 100 corresponding to the user input. The device 100 extracts information regarding an operation corresponding to the detected at least one user input 10 or 20 from the database and performs the operation on the basis of the extracted information. The operation corresponding to the user input may vary depending on the type of an application running on the device 100 or the type of digital content.

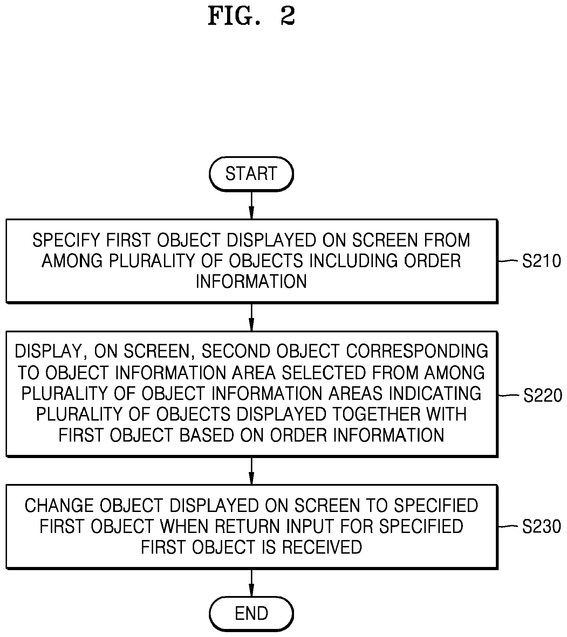

A method of the device 100 detecting a user input for information regarding a plurality of objects displayed on the screen and perform an operation will be described below with reference to FIG. 2.

FIG. 2 is a flowchart for describing a method of the device 100 displaying an object according to an embodiment.

In step 210, the device 100 specifies a first object displayed on the screen from among a plurality of objects including order information. Here, the plurality of objects including order information may be organically connected to each other to constitute digital content. Also, the plurality of objects may be independently displayed on the screen on the basis of the order information.

For example, for a digital book, a plurality of pages included in the digital book may correspond to the plurality of objects. The device 100 may specify an n^{th} page displayed on the screen from among the plurality of pages.

Meanwhile, the device 100 specifies a first object displayed on the screen when a user's appointing input is detected. For example, when a touch input is detected from the screen for a predetermined time or longer, the user may specify the first object displayed on the screen. However, this is merely an example embodiment, and the appointing input for specifying the first object displayed on the screen is not limited to the touch input of the predetermined time or longer. According to another example, when the user holds the device 100 and pressure detected by the device 100 is greater than or equal to a threshold value, the device 100 may specify the first object displayed on the screen.

In step 220, the device 100 displays, on the screen, a second object corresponding to an object information area selected from object information areas indicating the plurality of objects that are displayed together with the first object on the basis of the order information.

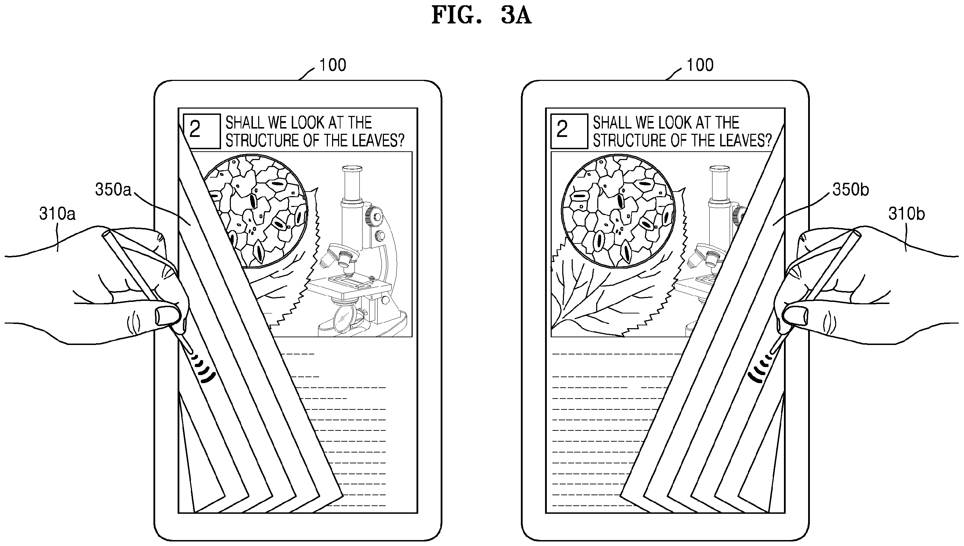

The device 100 according to an embodiment displays the object information areas indicating the plurality of objects on the screen together with the first object. Also, when the device 100 receives a request for displaying the object information areas from the user, the device 100 may display the object information areas on the screen together with the first object. This will be described below in detail with reference to FIGS. 3A to 4B.

Meanwhile, at least one piece of the order information indicating the objects may be displayed in the object information areas. For example, page number information of the digital book and information on table of contents of the digital book may be displayed in the object information areas.

The device 100 receives the user's selection input for selecting any one of the object information areas displayed on the screen. For example, the device 100 may detect the hovering input 10 (see FIG. 1) for selecting any one of the object information areas displayed on the screen. However, this is merely an example embodiment, and the user's selection input is not limited to the hovering input 10. According to another example, the device 100 may detect a touch input for selecting any one of the object information areas displayed on the screen.

Also, the device 100 displays a second object corresponding to the received selection input on the screen. The device 100 may change an object displayed on the screen from the first object to the second object. For example, when the n^{th} page of the digital book is displayed on the screen of the device 100, the device 100 may display a 2n^{th} page corresponding to the received selection input on the screen.

In step 230, when the device 100 receives a return input for the first object, the device 100 changes the object displayed on the screen to the specified first object.

The device 100 may receive the user's return input for displaying the specified first object on the screen again. Here, the return input may include a plurality of different types of user inputs. For example, when a drag input is sequentially detected from the screen after the user's touch input is detected for a predetermined time or longer, the device 100 may display the specified first object on the screen again. Here, a drag refers to an operation in which a user touches a screen with his or her finger or a touch tool and moves the finger or the touch tool to another position on the screen while maintaining the touch.

However, this is merely an example embodiment, and the user's return input is not limited to the touch input and the drag input that is sequentially performed after the touch input. According to another example, when a touch input and a double-tap input that is sequentially performed after the touch input are detected, the device 100 may display the specified first object on the screen again. Here, a double tap refers to an operation in which a user touches a screen with his or her finger or a touch tool (e.g., a stylus) twice.

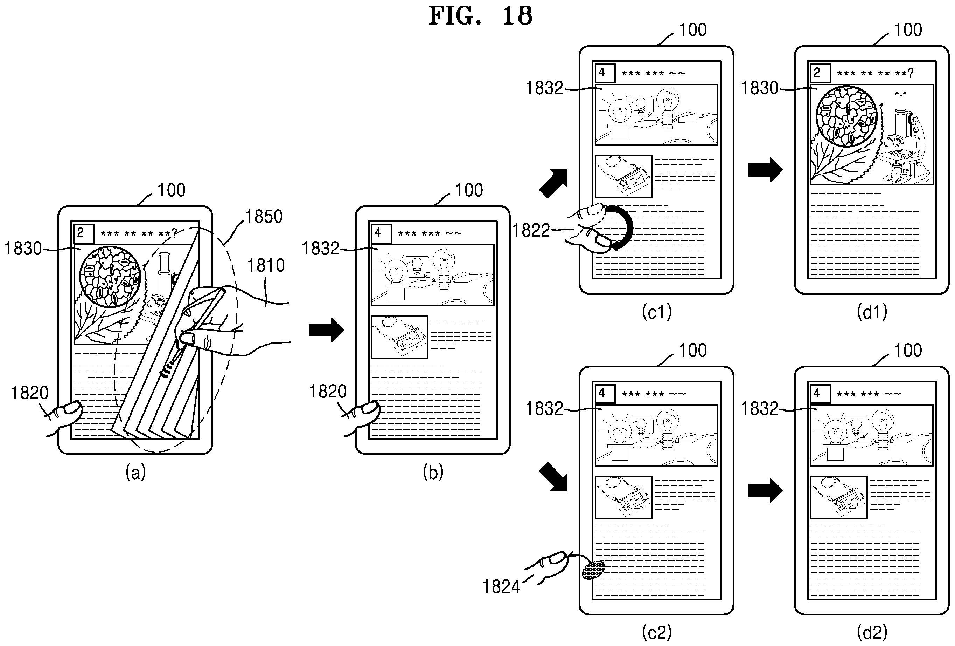

An example in which the device 100 changes the object displayed on the screen to the specified first object will be described in detail below with reference to FIG. 18.

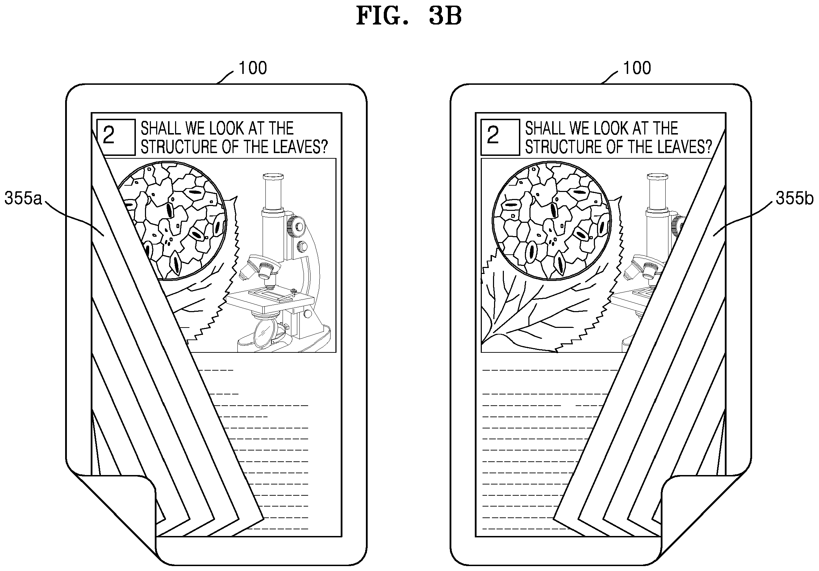

FIGS. 3A and 3B are diagrams for describing a method of the device 100 displaying a plurality of object information areas 350a, 355a, 350b, or 355b on the screen according to an embodiment.

The device 100 according to an embodiment may display the plurality of object information areas 350a, 355a, 350b, or 355b on the screen together with a first object when the device 100 receives a request for displaying the plurality of object information areas 350a, 355a, 350b, or 355b from a user.

Referring to FIG. 3A, when the device 100 receives, for example, a hovering input 310a or 310b, the device 100 may display a plurality of object information areas 350a or 350b on the screen together with a first object. Also, when the device 100 receives the hovering input 310a or 310b in a predetermined area, the device 100 may detect the hovering input 310a or 310b.

The device 100 displays high-ranked object information areas 350a that indicate objects having order information with a higher rank than that of the first object, which is displayed on the screen, on the screen together with the first object. Also, referring to (b) of FIG. 3A, the device 100 displays low-ranked object information areas 350b that indicate objects having order information with a lower rank than that of the first object, which is displayed on the screen, on the screen together with the first object. Here, the order information may include information regarding an order in which the plurality of objects are displayed on the screen.

For example, when the first object is an n^{th} page included in a digital book, the objects having high-ranked order information may be pages preceding the n^{th} page. Also, the objects having low-ranked order information may be pages following the n^{th} page.

The device 100 according to an embodiment may display the high-ranked object information areas 350a that indicate the objects having high-ranked order information on a left side of the screen and display the low-ranked object information areas 350b that indicate the objects having low-ranked order information on a right side of the screen so that a user may intuitively check the order information of the plurality of objects.

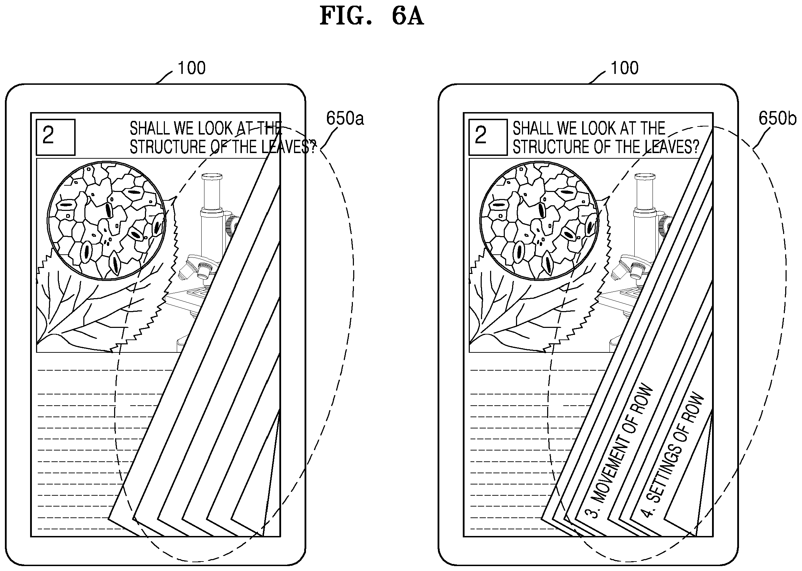

Meanwhile, the device 100 may display the plurality of object information areas 350a, 355a, 350b, or 355b in a diagonal direction in order to reduce a percentage of the plurality of object information areas displayed together with the first object. However, this is merely an example embodiment of the present invention, and the plurality of object information areas 350a, 355a, 350b, or 355b may be displayed in various forms depending on the user's settings. This will be described below in detail with reference to FIGS. 6A to 7C.

A diagram for describing a method of the device 100 displaying a plurality of object information areas on the screen when the device 100 is flexible according to an embodiment is shown in (a) and (b) of FIG. 3B.

When the device 100 is flexible, a change in form of the device 100 may be detected as one user input. For example, when the device 100 is folded inward at one side, the device 100 may display a plurality of object information areas 355a or 355b on the screen together with a first object.

Referring to FIG. 3B, the device 100 displays high-ranked object information areas 355a that indicate objects having order information with a higher rank than that of the first object, which is displayed on the screen, on the screen together with the first object. Also, referring to FIG. 3B, the device 100 displays low-ranked object information areas 350b that indicate objects having order information with a lower rank than that of the first object, which is displayed on the screen, on the screen together with the first object. Here, the order information may include information regarding an order in which the plurality of objects are displayed on the screen.

For example, when the first object is an n^{th} page included in a digital book, the objects having high-ranked order information may be pages preceding the n^{th} page. Also, the objects having low-ranked order information may be pages following the n^{th} page.

Meanwhile, the device 100 may display the plurality of object information areas 350a, 355a, 350b, or 355b in a diagonal direction in order to reduce a percentage of the plurality of object information areas displayed together with the first object. However, this is merely an example embodiment of the present invention, and the plurality of object information areas 350a, 355a, 350b, or 355b may be displayed in various forms depending on the user's settings. This will be described below in detail with reference to FIGS. 6A to 7C.

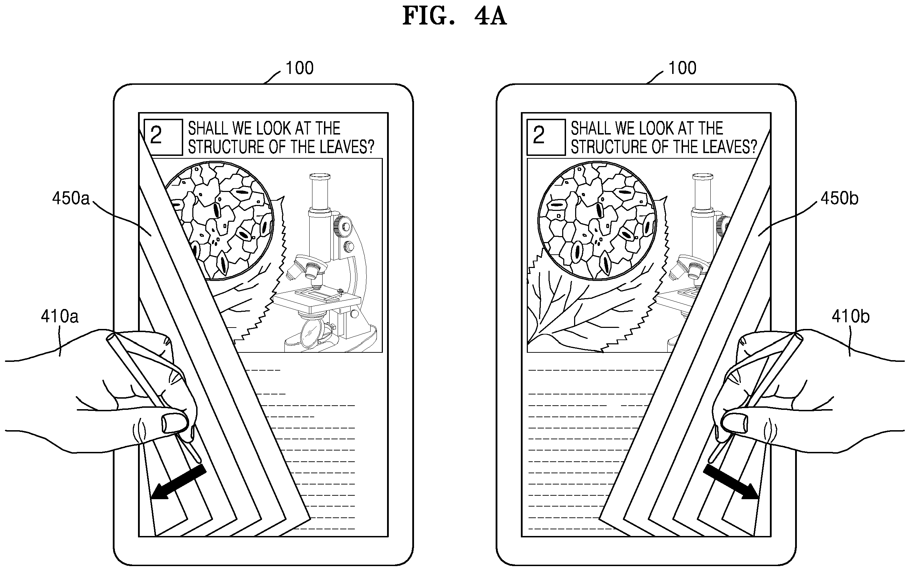

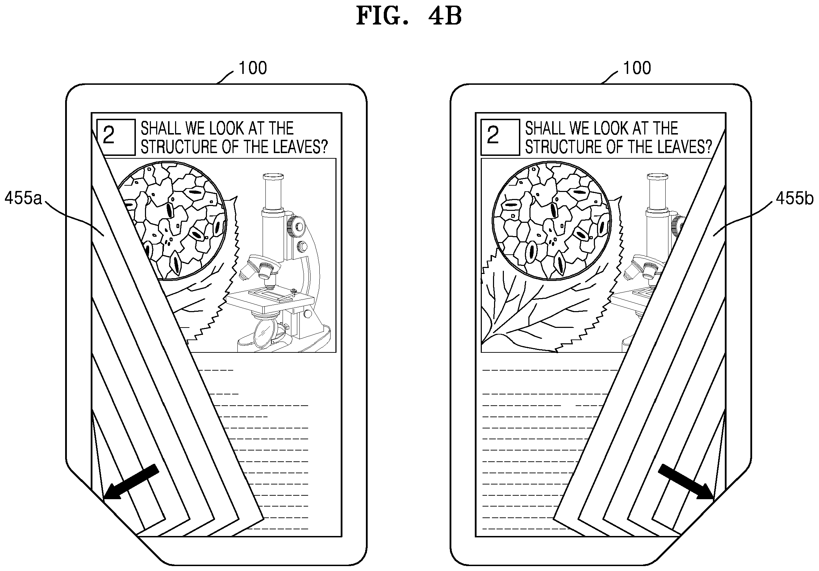

FIGS. 4A and 4B are diagrams for describing a method of the device 100 removing a plurality of object information areas 450a, 455a, 450b, or 455b displayed on the screen according to an embodiment.

Referring to FIG. 4A, the device 100 according to an embodiment may remove a plurality of object information areas 450a or 450b from the screen together with a first object when the device 100 receives a request for removing the plurality of object information areas 450a, 455a, 450b, or 455b from a user.

For example, when the device 100 receives a drag input 410a that moves to a bottom left corner from a position corresponding to high-ranked object information areas 450a displayed on the screen, the device 100 removes the high-ranked object information areas 450a from the screen. Also, referring to FIG. 4B, when the device 100 receives a drag input 410b that moves to a bottom right corner from a position corresponding to low-ranked object information areas 450b displayed on the screen, the device 100 removes the low-ranked object information areas 450b from the screen.

Referring to FIG. 4B, the device 100 according to an embodiment may remove a plurality of object information areas 455a or 455b from the screen together with the first object when the device 100 is flexible and receives a request for removing the plurality of object information areas 455a or 455b from the user.

For example, when the device 100 detects an input that folds the device 100 outward at the bottom left corner, the device 100 removes the high-ranked object information areas 455a from the screen. Also, referring to FIG. 4B, when the device 100 detects an input that folds the device 100 outward at the bottom right corner, the device 100 removes the low-ranked object information areas 455a from the screen.

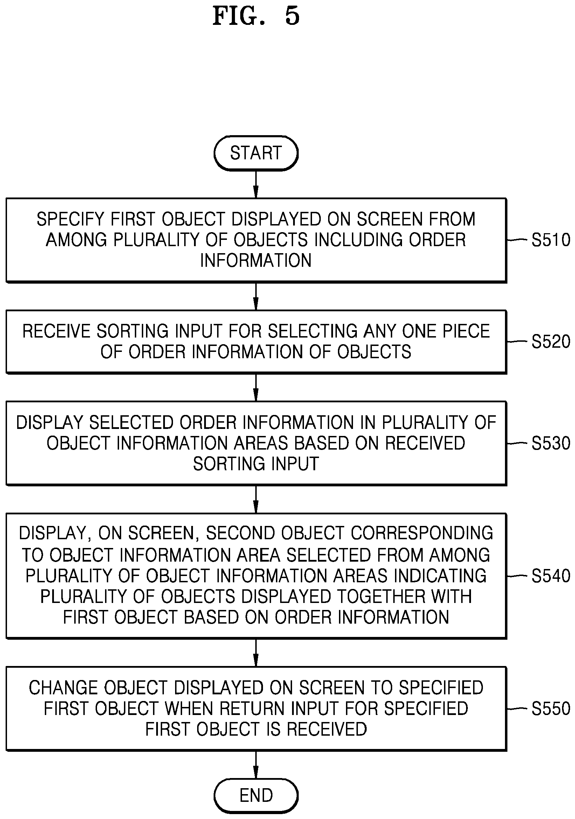

FIG. 5 is a diagram for describing a method of the device 100 displaying additional information regarding an object on the screen according to an embodiment.

In step 510, the device 100 specifies a first object displayed on the screen from among a plurality of objects including order information. For example, the device 100 specifies the first object displayed on the screen when a user's appointing input is detected. Here, step 510 may correspond to the above-described step 210.

In step 520, the device 100 receives a sorting input for selecting any one piece of the order information of the objects. Here, the order information of the objects may include information regarding an order in which the plurality of objects are displayed on the device 100.

For example, when a page of a digital book is displayed on the device 100, a page number of the page or information on table of contents of the page may be the order information. As another example, when a gallery application is running on the device 100, each object may be a photo stored in a gallery. When a photo is displayed on the device 100, a date on which the photo was captured and an index number assigned to the photo by a user may be the order information. As still another example, when a webpage is displayed on the device 100, a time record having a time at which the user visits at least one webpage may be included in the order information.

Meanwhile, the device 100 receives a sorting input that selects any one piece of the order information of the objects displayed on the screen. For example, when a page of a digital book is displayed on the screen, the device 100 may select a page number as the order information according to the received sorting input. As another example, when a photo is displayed on the device 100, the device 100 may select a date on which the photo was captured as the order information according to the received sorting input. As still another example, when a webpage is displayed on the screen, the device 100 may select a time record having a time at which the user visits the webpage as the order information.

In step 530, the device 100 displays the selected order information in the plurality of object information areas on the basis of the received sorting input. The device 100 may display order information corresponding to each of the plurality of object information areas that are sequentially displayed on the basis of the selected order information.

For example, when a page of a digital book is displayed on the screen, the device 100 may display a page number in each page information area. As another example, when a gallery application is running on the device 100, the device 100 may display a photo capture date in each photo information area. As still another example, when a webpage is displayed on the device 100, the device 100 may display a visiting time record of the webpage in each webpage information area.

Meanwhile, the plurality of object information areas may be displayed in the form of an image in which the object displayed on the screen of the device 100 is folded at one side. Examples in which the device 100 displays the order information in a plurality of object information areas will be described below in detail with reference to FIGS. 6A to 7C.

In step 540, the device 100 displays a second object corresponding to an object information area selected from object information areas indicating the plurality of objects that are displayed together with the first object on the basis of the order information.

The device 100 according to an embodiment displays the object information areas indicating the plurality of objects on the screen together with the first object. Also, when the device 100 receives a request for displaying the object information areas from the user, the device 100 may display the object information areas on the screen together with the first object. Here, step 540 may correspond to the above-described step 220.

In step 550, when the device 100 receives a return input for the first object, the device 100 changes the object displayed on the screen to the specified first object. The device 100 may receive the user's return input for displaying the specified first object on the screen again. Here, the return input may include a plurality of different types of user inputs. Here, step 550 may correspond to the above-described step 230.

FIGS. 6A to 7C are diagrams for describing the kinds or types of the plurality of object information areas displayed on the screen by the device 100 according to an embodiment.

FIG. 6A shows an object information area that is displayed on the screen together with a page when a digital book is displayed on the device 100 according to an embodiment.

Referring to FIG. 6A, the device 100 may display page information areas 650a indicating a plurality of pages of the digital book as an image in which the pages are folded at one side of the screen of the device 100. The device 100 may display the page information areas 650a indicating the plurality of pages at the one side of the screen of the device 100 with the same size.

However, this is merely an example embodiment of the present invention, and the device 100 may display the page information areas with different sizes according to hierarchical information included in the order information of the plurality of pages.

For example, referring to FIG. 6A, when the device 100 displays page information areas 650b indicating a plurality of pages of a digital book, the device 100 may display a page information area in an upper layer to be wider than a page information area in a low layer according to hierarchical information. The plurality of pages included in the digital book may be classified into pages included in upper items and pages included in lower items according to information on table of contents.

For example, when the digital book corresponds to a textbook, the pages may be classified into a chapter, an intermediate section, and a sub-section on the basis of the hierarchical information included in the order information. The device 100 may display page information areas of the pages included in the chapter to be wider than page information areas of the pages included in the intermediate section and the sub-section.

According to an embodiment, the device 100 may display a section name corresponding to the pages in the page information areas displayed on the screen as the order information. For example, the device 100 may display a chapter name in the page information area of the pages included in the chapter.

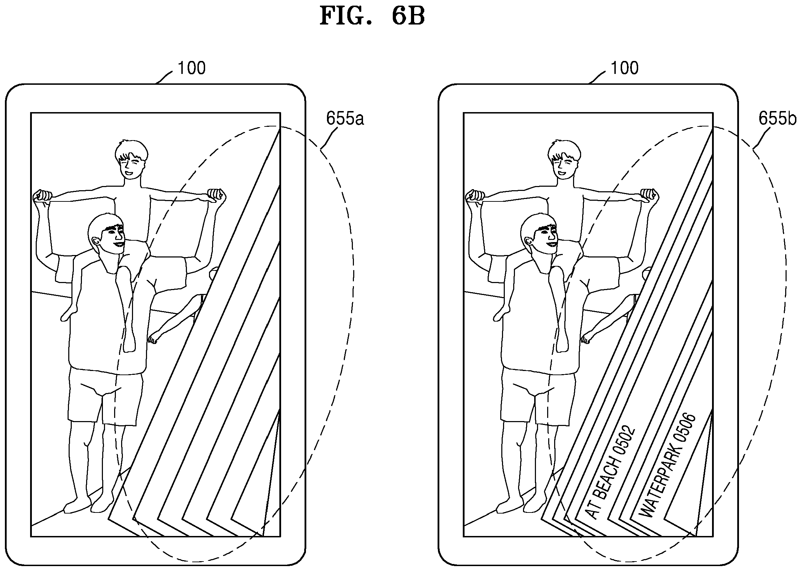

FIG. 6B shows an object information area that is displayed on the screen together with a photo when a gallery application is running on the device 100 according to an embodiment.

Referring to FIG. 6B, the device 100 may display photo information areas 655a indicating a plurality of photos included in a gallery folder as an image in which pages are folded at one side of the screen of the device 100. The device 100 may display photo information areas 655b indicating the plurality of pages at the one side of the screen of the device 100 with the same size.

However, this is merely an example embodiment of the present invention, and the device 100 may display the photo information areas with different sizes on the basis of a user's settings. Referring to FIG. 6B, when the device 100 displays the page information areas 655b indicating the plurality of photos, the device 100 may display a photo information area corresponding to a photo selected according to a predetermined criterion to be wider than photo information areas of the other photos.

For example, the device 100 may display a photo information area of a photo selected by the user more than a predetermined number of times to be wider than photo information areas of the other photos, which are unselected.

According to an embodiment, the device 100 may display a date on which each photo was captured in the photo information areas displayed on the screen as the order information. As another example, the device 100 may display additional information for a photo in the photo information area together with the order information of the photo. For example, referring to FIG. 6B, the device 100 may display information regarding a place at which a user captured a photo in the photo information area together with a date on which the user captured the photo. The device 100 may display a section name corresponding to the pages as the order information.

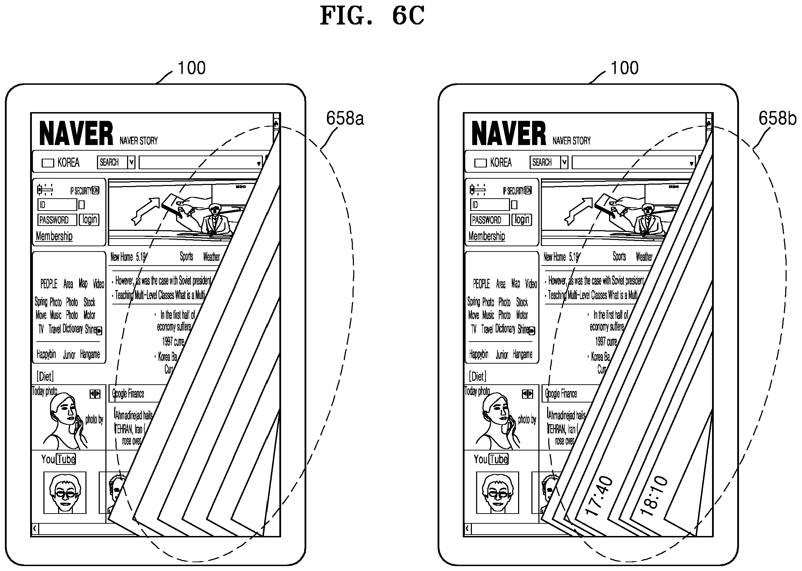

FIG. 6C shows an object information area that is displayed on the screen together with a webpage when the webpage is displayed on the device 100 according to an embodiment.

Referring to FIG. 6C, the device 100 may display webpage information areas 658a indicating a plurality of webpages visited by a user as an image in which pages are folded at one side of the screen of the device 100. The device 100 may display the webpage information areas 658a indicating the plurality of pages at the one side of the screen of the device 100 with the same size.

However, this is merely an example embodiment of the present invention, and the device 100 may display the webpage information areas 658b with different sizes on the basis of a user's settings. Referring to FIG. 6C, when the device 100 displays the webpage information areas 658b indicating the plurality of webpages, the device 100 may display an webpage information area corresponding to a webpage selected according to a predetermined criterion to be wider than webpage information areas of the other webpage .

For example, the device 100 may display a webpage designated by a user as a favorite to have an area wider than webpage information areas of the other webpages that are not designated as favorites.

According to an embodiment, the device 100 may display times at which the webpages are visited in the webpage areas 658b as the order information. For example, referring to FIG. 6C, the device 100 may display information regarding a time at which the user visits the webpage designated as the favorite in the webpage areas 658b as the order information.

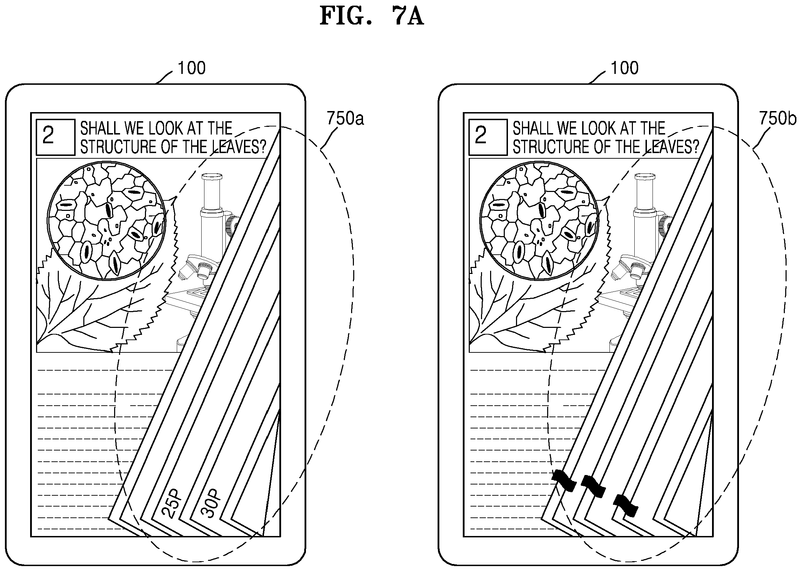

FIG. 7A shows an object information area that is displayed on the screen together with a page when a digital book is displayed on the device 100 according to an embodiment.

The device 100 according to an embodiment may display page numbers corresponding to a plurality of pages of the digital book in page information areas 750a. According to another embodiment, referring to FIG. 7A, the device 100 may display only page numbers for specific pages selected by a user in the page information areas.

Also, the device 100 may display the page information areas of the specific pages selected by the user to be wider than page information areas of the other pages that are unselected.

Meanwhile, in the object information areas displayed on the screen, additional information set by the user for each object may be displayed in the form of an image together with the order information. Referring to FIG. 7A, the device 100 may display flag shaped images in page information areas 750b of specific pages selected by the user. However, this is just an exemplary embodiment of the present invention, and a variety of additional information having at least one type among text, an image, and a video may be displayed in the object information areas.

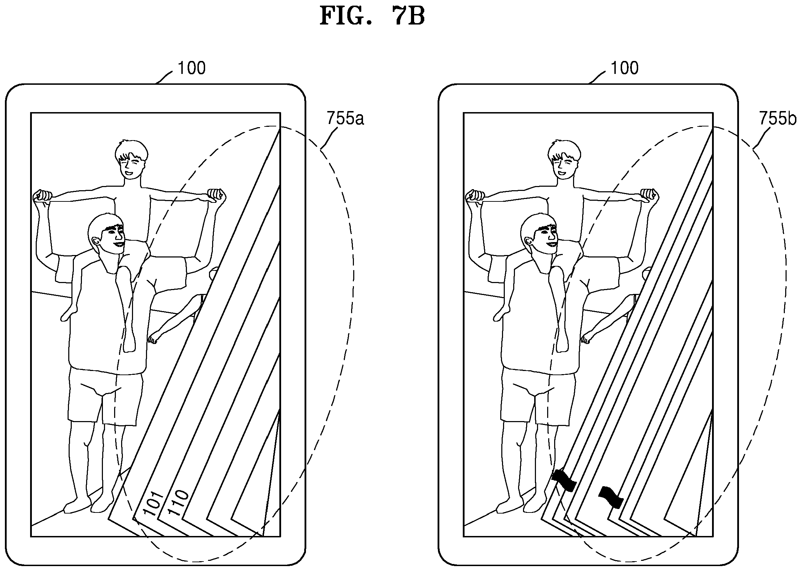

FIG. 7B shows an object information area that is displayed on the screen together with a photo when a gallery application is running on the device 100 according to an embodiment.

The device 100 according to an embodiment may display index numbers corresponding to photos in photo information areas 755a. Here, index numbers may be determined on the basis of an order in which the photos were captured. According to another embodiment, referring to FIG. 7B, the device 100 may display only index information of specific photos selected by a user in photo information areas.

Also, the device 100 may display the photo information areas of the specific photos selected by the user to be wider than photo information areas of the other photos that are unselected.

Meanwhile, referring to FIG. 7B, in the object information areas displayed on the screen, additional information set by the user for each object may be displayed in the form of an image together with the order information. For example, additional information regarding a plurality of photos may include information regarding a place where each of the plurality of photos was captured. The device 100 may select a photo captured at a place designated by the user and display a flag shaped image in a corresponding photo information area.

For example, when the user enters identification information indicating place A into a gallery application running on the device 100, the device 100 may select a photo captured at place A and display a flag shaped image in a photo information area of the selected photo. However, this is merely an example embodiment of the present invention, and a photo may be selected on the basis of a variety of additional information other than a place at which the photo was captured. For example, when the user enters identification information for a specific person, the device 100 may select a photo containing the specific person and display a flag shaped image in a photo information area of the selected photo. Here, identification information for a specific person may include photo information for the specific person stored in an address book application, an SNS application or the like.

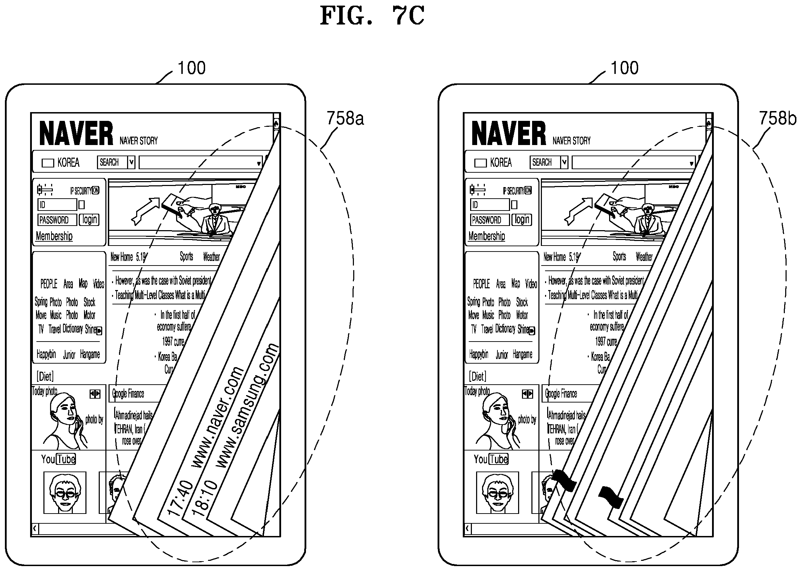

FIG. 7C shows an object information area that is displayed on the screen together with a webpage when the webpage is displayed on the device 100 according to an embodiment.

The device 100 according to an embodiment may display order information and index information corresponding to webpages in webpage information areas 755a corresponding to the webpages.

Referring to FIG. 7C, a time at which a user visited a webpage designated as a favorite and URL information of the designated webpage may also be displayed in webpage information areas 758a of the device 100. However, this is merely an example embodiment of the present invention, and the present invention is not limited thereto. For example, the device 100 may display at least one of order information and additional information of webpages that have been visited within a predetermine time from a current time in the webpage information areas.

Referring to FIG. 7C, additional information set by the user for each object may also be displayed in the form of an image in the object information areas displayed on the screen together with the order information.

For example, a plurality of webpages may be classified into a main webpage and a sub-webpage included in the main webpage. For example, when a user visits webpage S, a menu provided by webpage S may be selected, and webpage S1 and webpage S2 may be displayed on the screen. Also, a user may visit webpage A other than webpage S. In this case, webpage S and webpage A are included in the main webpage, and webpage S1 and webpage S2 are included in a sub-webpage of webpage S.

The device 100 may select webpages included in the same main webpage and display a flag shaped image in the webpage information areas. However, this is merely an example embodiment of the present invention, and the device 100 may select only webpages included in the main webpage and display a flag shaped image in the selected webpage information area.

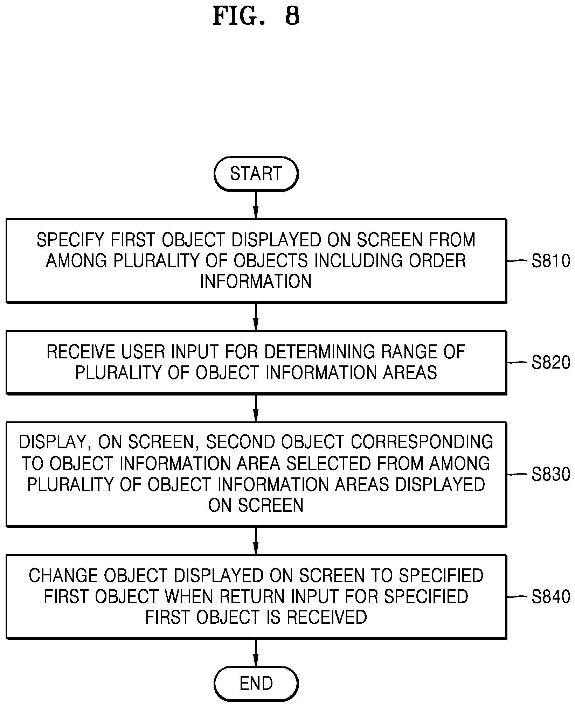

FIG. 8 is a flowchart for describing a method of the device 100 determining a range of an object information area displayed on the screen according to an embodiment.

In step 810, the device 100 specifies a first object displayed on the screen from among a plurality of objects including order information. For example, the device 100 specifies the first object displayed on the screen when a user's appointing input is detected. Here, step 810 may correspond to the above-described step 210.

In step 820, the device 100 receives a user input for determining a range of a plurality of object information areas displayed on the screen together with the first object. Also, the device 100 according to an embodiment may display only object information areas corresponding to some objects included in digital content on the screen.

For example, the user may control a length of a hovering input entered to the screen and determine a range of the plurality of object information areas displayed on the screen. When the user enters a hovering input to a specific area of the screen and then moves a first length while maintaining the hovering input, the device 100 may display only object information areas corresponding to half of the plurality of objects on the screen. Also, when the user enters a hovering input of a second length corresponding to half of the first length to the screen, the device 100 may display only object information areas corresponding to a quarter of the plurality of objects on the screen. Here, information regarding the number of objects corresponding to the length of the hovering input may be prestored in a database that is present inside or outside the device 100.

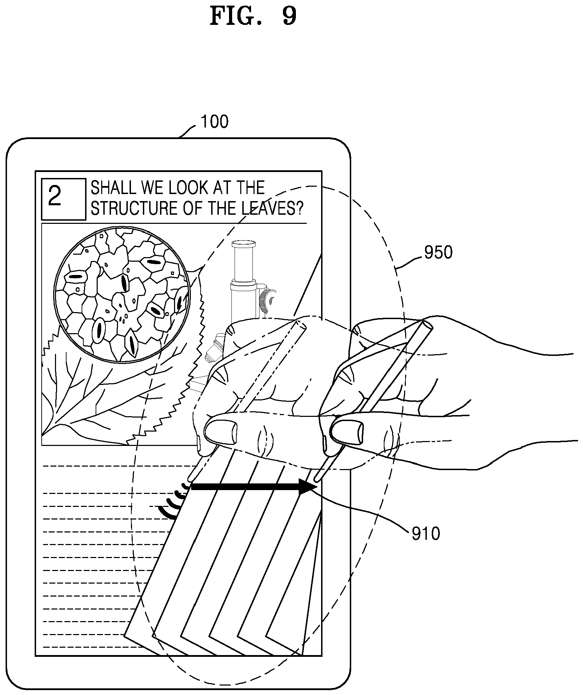

According another embodiment, when a user enters a hovering input to the screen, the device 100 may display object information areas according to the hovering input. This will be described with reference to FIG. 9.

FIG. 9 is a diagram for describing a method of the device 100 displaying a plurality of object information areas 950 on the basis of a hovering input received by the device 100 according to an embodiment. When a hovering input 910 is detected, the device 100 may display an object information area of object a2 following an object information area of object a1 that is currently displayed on the screen.

Also, the device 100 may sequentially display object information areas of objects according to movement of the hovering input 910 on the basis of the order information. For example, the device 100 may sequentially display object information areas of objects having order information with a lower rank than that of object a2 according to the movement of the hovering input 910.

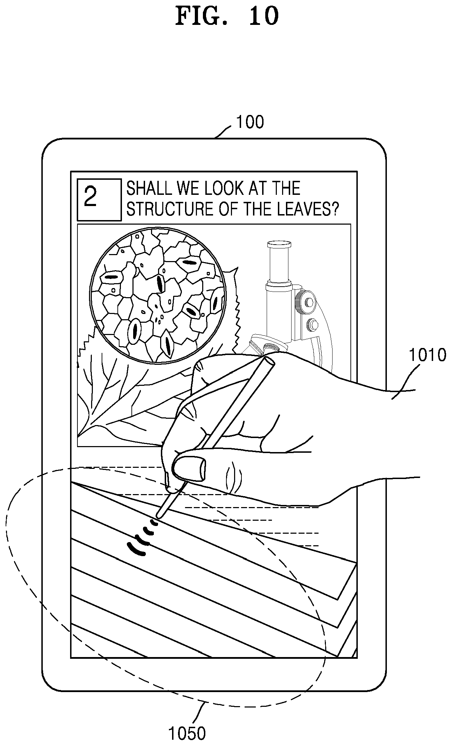

The device 100 according to an embodiment may display the object information areas 950 of the objects in a portion at which the hovering input is detected from the screen. This will be described with reference to FIG. 10.

FIG. 10 is a diagram for describing a method of the device 100 determining a position at which a plurality of object information areas 1050 are displayed on the basis of a user input 1010 according to an embodiment.

Referring to FIG. 10, the device 100 may display the plurality of object information areas 1050 in a portion in which a hovering input 1010 is detected from the screen. For example, when the hovering input 1010 is detected at the bottom left corner of the screen, the device 100 may display the object information areas 1050 of objects having low-ranked order information or high-ranked order information with respect to order information of an object displayed at the bottom left corner of the screen.

However, this is merely an example embodiment of the present invention, and an input for determining positions of the plurality of object information areas 1050 displayed on the screen of the device 100 is not limited to the hovering input 1010. According to another example, the device 100 may determine the positions at which the plurality of object information areas 1050 are displayed by the screen being touched.

A method of the device 100 determining the range of object information areas displayed on the screen will be described with reference to FIG. 8.

In step 830, the device 100 displays a second object corresponding to an object information area selected from among a plurality of object information areas displayed on the screen. The device 100 according to an embodiment displays the object information areas indicating the plurality of objects on the screen together with a first object. Also, when the device 100 receives a request for displaying the object information areas from the user, the device 100 may display the object information areas on the screen together with the first object. Here, step 830 may correspond to the above-described step 220, except that the range of the object information areas displayed on the screen is determined by a user input.

In step 840, when the device 100 receives a return input for the first object, the device 100 changes the object displayed on the screen to the specified first object. The device 100 may receive the user's return input for displaying the specified first object on the screen again. Here, the return input may include a plurality of different types of user inputs. Here, step 840 may correspond to the above-described step 230.

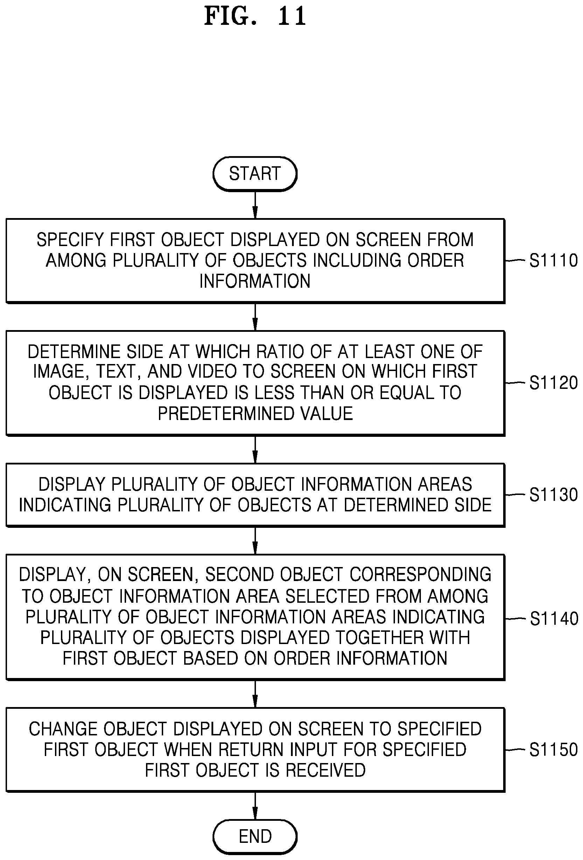

FIG. 11 is a flowchart for describing a method of the device 100 confirming a first object displayed on the screen and determine a position at which a plurality of object information areas are displayed according to an embodiment.

In step 1110, the device 100 specifies a first object displayed on the screen from among a plurality of objects including order information. For example, the device 100 specifies a first object displayed on the screen when a user's appointing input is detected. Here, step 810 may correspond to the above-described step 210.

In step 1120, the device 100 determines a side at which a ratio of at least one of an image, text, and a video to the screen on which the first object is displayed is less than or equal to a predetermined value.

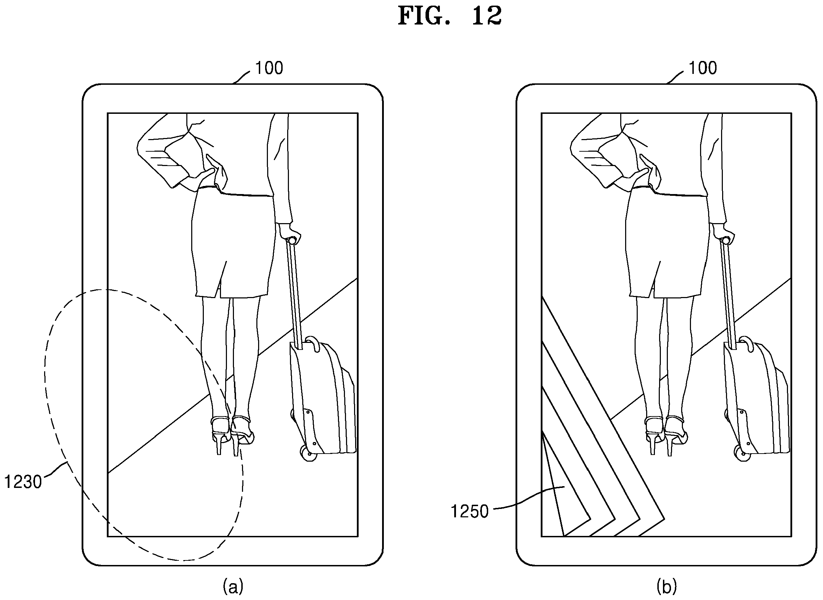

The device 100 may analyze the first object displayed on the screen and automatically determine a plurality of object information areas to be displayed. A method of the device 100 automatically determining a position at which the plurality of object information areas are displayed will be described in detail with reference to FIG. 12.

FIG. 12 is a diagram for describing in detail a method of the device 100 confirming a first object displayed on the screen and determine a position at which a plurality of object information areas 1250 are displayed according to an embodiment.

The device 100 may determine a portion of the first object that has a small percentage of text, an image, and a video and display the plurality of object information areas 1250 in the determined portion in order to minimize a portion of the first object that is hidden by the plurality of object information areas 1250 being displayed on the screen.

Referring to (a) of FIG. 12, a book cover of a digital book is displayed on the screen of the device 100. The device 100 may analyze the book cover and determine area A 1230 that has the smallest percentage of an image.

The device 100 may display the object information areas 1250 indicating a plurality of objects included in the digital book on the determined area A, as shown in (a) of FIG. 12.

In step 1130, the device 100 displays the plurality of object information areas at the determined side. As described above with reference to FIG. 12, the device 100 may display the plurality of object information areas at the side determined in step 1120. The method of the device 100 displaying the plurality of object information areas may correspond to the method described with reference to FIG. 12.

In step 1140, the device 100 displays, on the screen, a second object corresponding to an object information area selected from among the plurality of object information areas indicating the plurality of objects that are displayed together with the first object on the basis of the order information.

The device 100 according to an embodiment displays the object information areas indicating the plurality of objects on the screen together with a first object. Also, when the device 100 receives a request for displaying the object information areas from the user, the device 100 may display the object information areas on the screen together with the first object. Here, step 1140 may correspond to the above-described step 220, except that the range of the object information areas displayed on the screen is determined by a user input.

In step 1150, when the device 100 receives a return input for the first object, the device 100 changes the object displayed on the screen to the specified first object. The device 100 may receive the user's return input for displaying the specified first object on the screen again. Here, the return input may include a plurality of different types of user inputs. Here, step 1150 may correspond to the above-described step 230.

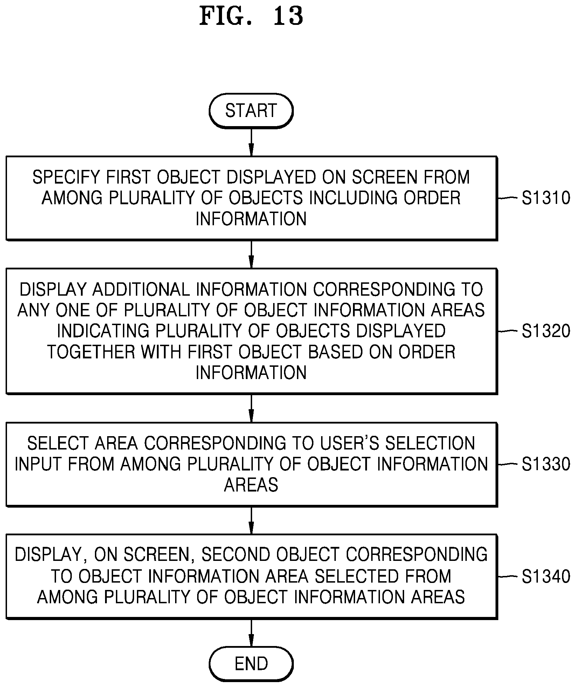

FIG. 13 is a flowchart for describing a method of the device 100 displaying additional information corresponding to an object according to an embodiment.

In step 1310, the device 100 specifies a first object displayed on the screen from among a plurality of objects including order information. For example, the device 100 specifies the first object displayed on the screen when a user's appointing input is detected. Here, step 1310 may correspond to the above-described step 210.

In step 1320, the device 100 displays additional information of an object corresponding to any one of a plurality of object information areas indicating a plurality of objects displayed together with the first object on the basis of the order information.

The device 100 may display additional information of an object corresponding to any one object information area designated by the user from among the plurality of areas. Here, the additional information may include descriptions of features of the object and records of the object by the user. For example, the descriptions of features of the object may include a thumbnail image of the object, a title of the object, a summary of information included in the object, or the like. The records of the object by the user may include a memo or a bookmark record that is written about the object by the user. However, the descriptions of features of the object and the records of the object by the user are just an example of the additional information, and a variety of information for identifying the plurality of objects may be included in the additional information.

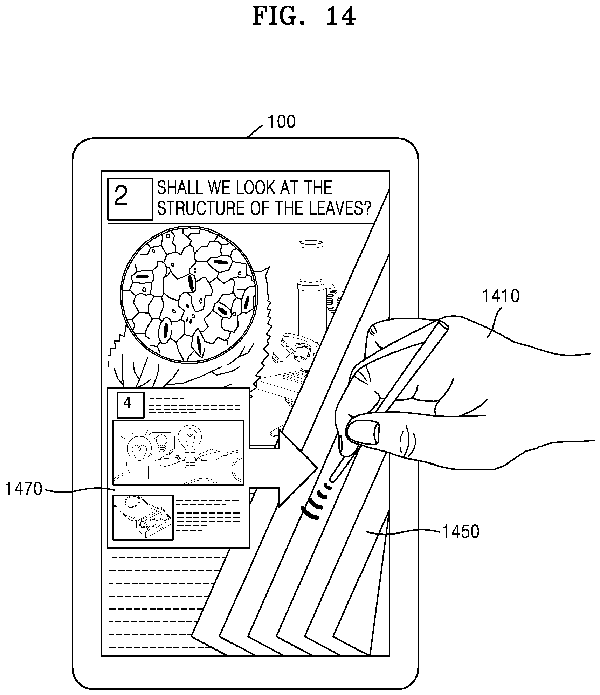

A method of the device 100 displaying the additional information of the object corresponding to the object information area will be described in detail below with reference to FIGS. 14 to 16.

In step 1330, the device 100 displays, on the screen, a second object corresponding to an object information area selected from among the plurality of object information areas indicating the plurality of objects that are displayed together with the first object on the basis of the order information.

The device 100 according to an embodiment displays the object information areas indicating the plurality of objects on the screen together with a first object. Also, when the device 100 receives a request for displaying the object information areas from the user, the device 100 may display the object information areas on the screen together with the first object. Here, step 1330 may correspond to the above-described step 220, except that the range of the object information areas displayed on the screen is determined by a user input.

In step 1340, when the device 100 receives a return input for the first object, the device 100 changes the object displayed on the screen to the specified first object. The device 100 may receive the user's return input for displaying the specified first object on the screen again. Here, the return input may include a plurality of different types of user inputs. Here, step 1340 may correspond to the above-described step 230.

FIG. 14 is a diagram for describing in detail a method of the device 100 displaying additional information corresponding to an object according to an embodiment.

Referring to FIG. 14, when a user input 1410 is detected from any one of a plurality of object information areas 1450 displayed on the screen, the device 100 may display additional information 1470 of an object corresponding to the any one object information area on the screen.

For example, the device 100 may detect a hovering input 1410 from an n+3^{th} page information area among the plurality of page information areas 1450 displayed on the screen. When the hovering input 1410 is detected, the device 100 may display the additional information 1470 corresponding to the n+3^{th} page on the screen. For example, the device 100 may display a thumbnail image for the n+3^{th} page on the screen.

However, this is merely an example embodiment of the present invention, and the present invention is not limited thereto. According to another example, the device 100 may display title information of an object corresponding to the object information area from which the user input 1410 is detected as additional information of the object. When a page of a digital book is displayed on the screen of the device 100, a title of the page may be displayed as the additional information.

According to still another embodiment, the device 100 may set the displayed additional information to be different depending on the type of the detected user input. For example, the device 100 may set the additional information displayed on the screen to be different depending on a height of the detected hovering input 1410. When the hovering input 1410 detected by the device 100 is within a range of 1 cm to 2 cm, the device 100 may display a thumbnail image for the page as the additional information. When the hovering input 1410 detected by the device 100 is within a range of 2cm to 3cm, the device 100 may display the title of the page as the additional information.

The device 100 may detect various types of inputs other than the hovering input 1410 according to settings, and may display additional information of the object. According to another embodiment, the device 100 may display additional information of various types of objects depending on a pressure level of the detected touch input.

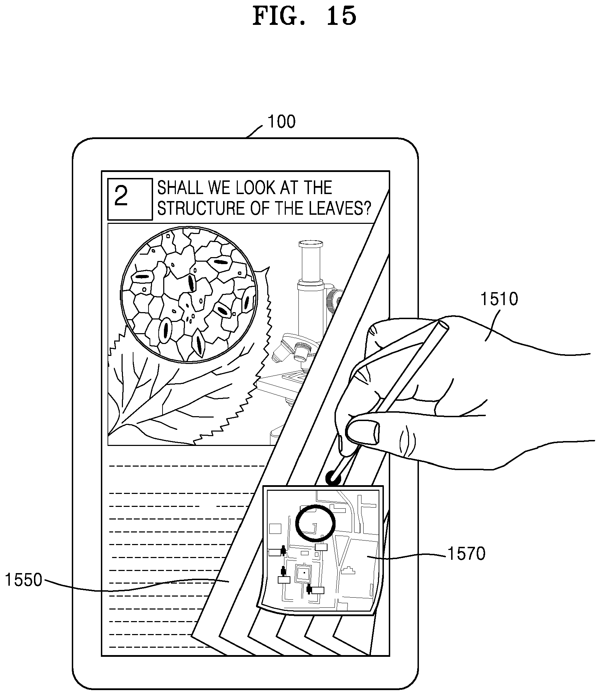

The device 100 may display the additional information of the object on the screen in various forms. For example, the device 100 may display the additional information of the object on the screen in the form of a memo. This will be described in detail below with reference to FIG. 15.

FIG. 15 is a diagram for describing in detail a method of the device 100 displaying additional information corresponding to an object according to another embodiment.

Referring to FIG. 15, when a user input 1510 is detected from any one of a plurality of object information areas 1550 displayed on the screen, the device 100 may display additional information 1570 of an object corresponding to the any one object information area on the screen in the form of a memo.

For example, the device 100 may detect a touch input 1510 from an n+3^{th} page information area among the plurality of page information areas 1550 displayed on the screen. When the touch input 1510 is detected, the device 100 may display the additional information 1570 corresponding to the n+3^{th} page on the screen in the form of a memo. For example, the device 100 may display handwritten information that is recorded about the n+3^{th} page by a user on the screen in the form of a memo.

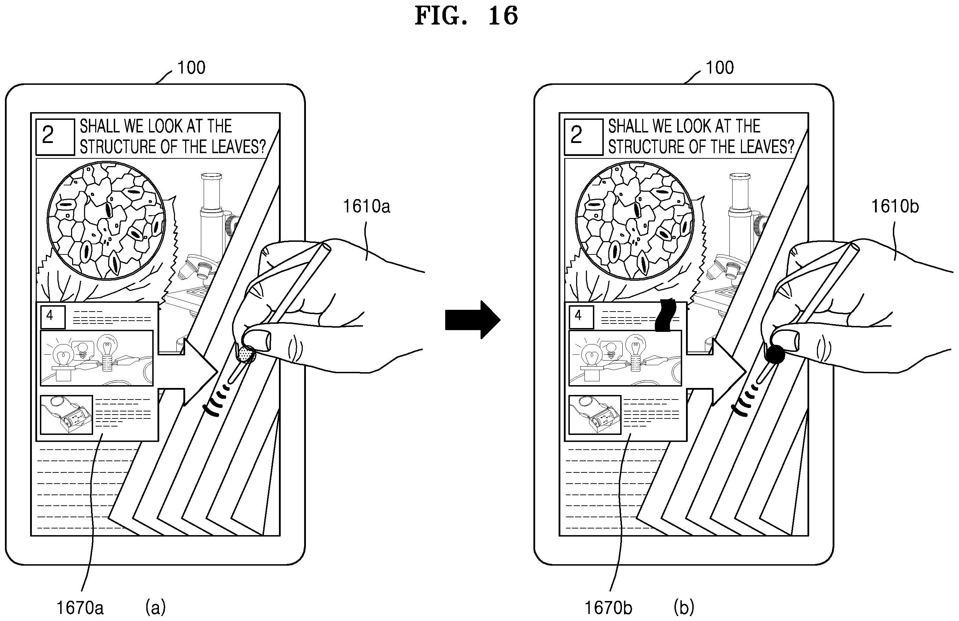

Meanwhile, the device 100 may add new information regarding the object to the additional information 1570 of the object displayed on the screen. This will be described in detail below with reference to FIG. 16.

FIG. 16 is a diagram for describing in detail a method of the device 100 adding new information to additional information corresponding to an object according to still another embodiment.

The device 100 according to an embodiment may display additional information corresponding to object a in an object information area of object a that is selected by a user from among a plurality of object information areas. The device 100 may display new information received from the user together with the additional information corresponding to object a. The user may easily display the new information regarding object a without changing the object displayed on the device 100 to object a.

For example, referring to (a) of FIG. 16, when the user selects the object information area of object a, the device 100 may display a thumbnail image 1670a for object a on the screen. The user may confirm an image to be specified in object a through the thumbnail image 1670a for object a.

The user may enter a hovering input into a sample image to be specified in the thumbnail image 1670a for object a and then click a button positioned at an input tool to specify the sample image. For example, referring to (b) of FIG. 16, when the user pushes the button positioned at the input tool, a bookmark may be displayed in a sample image displayed on the thumbnail image 1670a for object a. Also, the bookmark may be displayed even in a sample image actually included in object a.

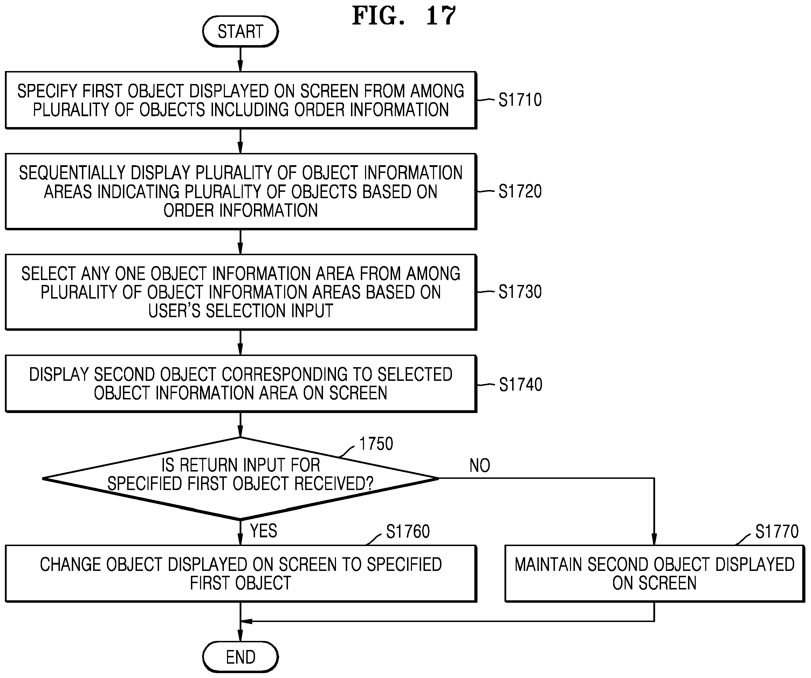

FIG. 17 is a flowchart for describing a method of the device 100 displaying a specified object on the screen again according to an embodiment.

In step 1710, the device 100 specifies a first object displayed on the screen from among a plurality of objects including order information. For example, the device 100 specifies the first object displayed on the screen when a user's appointing input is detected. Here, step 1710 may correspond to the above-described step 210.

In step 1720, the device 100 displays a plurality of object information areas indicating the plurality of objects on the basis of the order information of the plurality of objects. When the device 100 displays any one of a plurality of objects constituting digital content on the screen, the device 100 may display a plurality of object information areas indicating the plurality of objects on the screen.

For example, when an n^{th} page of a digital book is displayed on the screen of the device 100, the device 100 may also display page information areas indicating the other pages on the screen.

In step 1730, the device 100 receives a user's selection input for selecting any one of the object information areas displayed on the screen. For example, the device 100 may detect the hovering input 10 (see FIG. 1) for selecting any one of the object information areas displayed on the screen. However, this is merely an example embodiment, and the user's selection input is not limited to the hovering input 10. As another example, the device 100 may detect a touch input for selecting any one of the object information areas displayed on the screen.

In step 1740, the device 100 displays a second object corresponding to the selected object information area on the screen. Here, step 1740 may correspond to the above-described step 220.

In step 1750, the device 100 determines whether a return input for the specified first object is received. Here, the return input may include a plurality of different types of user inputs. For example, when a drag input is sequentially detected from the screen after the user's touch input is detected for a predetermined time or longer, the device 100 may display the specified first object on the screen again. The return input will be described below in detail with reference to FIG. 18.

In step 1760, the device 100 changes the object displayed on the screen to the specified first object on the basis of the received return input. The device 100 according to an embodiment may extract the first object and display the extracted first object on the screen on the basis of marking information of the first object specified in step 1710. Here, the marking information may be created in order information or additional information regarding the first object when the device 100 specifies the first object. Meanwhile, this is merely an example embodiment, and the device 100 may also separately create the marking information of the first object. When the return input is received, the device 100 may read the created marking information and display the first object on the screen.

In step 1770, the device 100 maintains the object displayed on the screen as the second object. When the return input is not received, the device deletes information regarding the specified first object and maintains the object displayed on the screen as the second object. Here, the information regarding the specified first object includes the marking information created when the first object displayed on the screen is specified in step 1710.

FIG. 18 is a diagram for describing in detail a method of the device 100 displaying a specified object on the screen again according to an embodiment.

Referring to (a) of FIG. 18, a first page 1830 of a digital book may be displayed on the screen of the device 100. The device 100 may detect a touch input 1820 that is entered to the screen on which the first page 1830 is displayed for a predetermined time or longer, and may specify the first page 1830. When the user's touch input 1820 is entered to the first page 1830 for the predetermined time or longer, the device 100 may create marking information regarding the first page 1830.

Also, the device 100 may detect a user's hovering input 1810 for selecting a second page information area from among a plurality of page information areas 1850 displayed on the screen together with the first page 1830.

Referring to (b) of FIG. 18, the device 100 may display a second page 1832 corresponding to the selected second page information area on the screen. Meanwhile, when the user's touch input 1820 is maintained, the device 100 according to an embodiment may maintain the marking information created for the first page 1830.

Referring to (c1) of FIG. 18, the device 100 may maintain the touch input 1820 for a certain time or longer and sequentially enter a drag input 1822 into the screen of the device 100.

Referring to (d1) of FIG. 18, when the drag input is detected, the device 100 may display the specified first page 1830 on the screen again.

Referring to (c2) of FIG. 18, the device 100 may detect an operation 1824 in which a finger or an input tool with which the screen has been touched is removed from the screen. When the device 100 detects the operation 1824 in which a finger or an input tool with which the screen has been touched is removed from the screen, the device 100 may delete the marking information created for the specified first page 1830.

Referring to (d2) of FIG. 18, the device 100 may maintain the screen on which the second page 1832 is displayed by deleting the marking information created for the specified first page 1830.

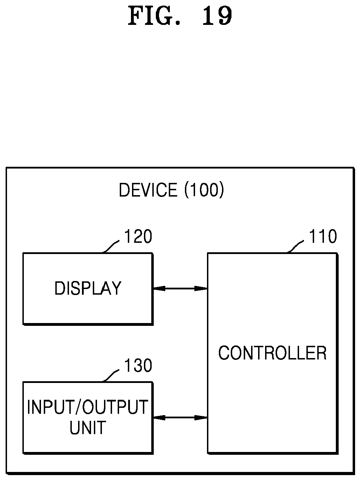

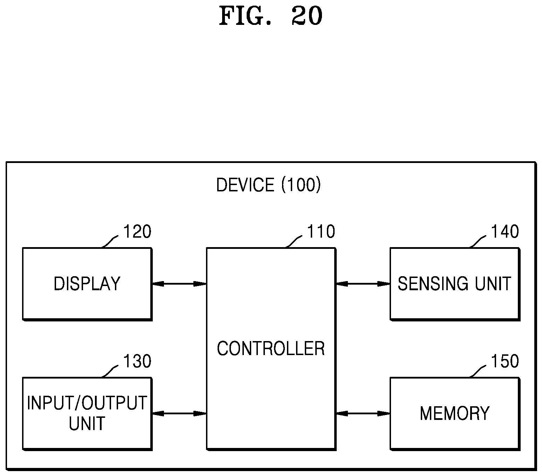

FIGS. 19 and 20 are block diagrams of the device 100 for displaying an object according to an embodiment.

As shown in FIG. 19, the device 100 for displaying an object according to an embodiment may include a controller 110, a display 120, and an input/output unit 130. However, this is merely an example embodiment of the present invention, and the device 100 may be implemented with more or less elements than those shown in the figure.

For example, the device 100 for displaying an object according to an embodiment of the present invention may further include a sensing unit 140 and a memory 150 other than the controller 110, the display 120, and the input/output unit 130.

The above elements will be described below in sequence.

Typically, the controller 110 controls an overall operation of the device 100 for displaying an object. For example, the controller 110 may generally control the display 120, the input/output unit 130, and the sensing unit 140 by executing programs stored in the memory 150.

The controller 110 specifies a first object displayed on the screen from among a plurality of objects including order information. The controller 110 specifies the first object displayed on the screen when a user's appointing input is detected through the input/output unit 130.

Also, the controller 110 may select positions of a plurality of object information areas to be displayed on the display 120. For example, the controller 110 may determine a side at which a ratio of at least one of an image, text, and a video to the screen on which the first object is displayed is less than or equal to a predetermined value and may control the display 120 to display the plurality of object information areas at the determined side. According to another example, the controller 110 may determine the positions of the plurality of object information areas to be displayed on the display 120 on the basis of a user input.

The controller 110 according to an embodiment may select any one object information area selected from among a plurality of object information areas, which indicate a plurality of objects displayed together with the first object on the basis of the order information. For example, the controller 110 may select a second object information area corresponding to a user's selection input from among the plurality of object information areas. A second object corresponding to the second object information area selected by the controller 110 is displayed on the display 120.

Also, when the user's return input is received, the controller controls the display 120 to display the specified first object again. Meanwhile, when the user's return input is not received, the controller 110 maintains the object displayed on the screen.

The display 120 displays any one of the plurality of objects including the order information. For example, the display 120 may display the second object corresponding to an object information area selected from among the plurality of object information areas.

Also, the display 120 may display the object information areas indicating the plurality of objects. The display 120 may also display order information or additional information of the objects corresponding to the object information areas.

When the display 120 and a touchpad form a layered structure to configure a touchscreen, the display 120 may also be used as an input device. The display 120 may include at least one of a liquid crystal display (LCD), a thin film transistor-LCD (TFT-LCD), an organic light-emitting diode (OLED) display, a flexible display, a three-dimensional (3D) display, and an electrophoretic display. The device 100 for displaying an object may also include two or more displays 120 according to an implementation of the device 100 for displaying an object. In this case, the two or more displays 120 may be disposed to face each other using a hinge.

The input/output unit 130 receives data for controlling the device 100 for displaying an object from the user. Also, the input/output unit 130 may output an output obtained by processing data according to a user input according to an embodiment. The input/output unit 130 may include, but is not limited to, a key pad, a dome switch, a touchpad (a contact capacitance type, a pressure resistance type, an infrared sensing type, a surface ultrasonic wave conduction type, an integral tension measurement type, a piezoelectric effect type, etc.), a jog wheel, a jog switch, etc.

The input/output unit 130 may receive a user input. For example, the input/output unit 130 may receive a user input for selecting any one of a plurality of objects. Also, the input/output unit 130 may receive a user input for selecting any one of a plurality of object information areas.

The input/output unit 130 may also receive a user input for requesting that order information or additional information of the objects corresponding to the plurality of object information areas be displayed. Also, the input/output unit 130 may receive a user input for requesting that a specified object be displayed again.

The sensing unit 140 may detect a state of the device 100 for displaying an object or a state surrounding the device 100 for displaying an object and may deliver the detected information to the controller 110.

The sensing unit 140 may include, but is not limited to, at least one of a magnetic sensor 141, an acceleration sensor 142, a temperature/humidity sensor 143, an infrared sensor 144, a gyroscope sensor 145, a positioning sensor 146 (e.g., Global Positioning System (GPS)), an air pressure sensor 147, a proximity sensor 148, and an RGB sensor (illumination sensor) 149. A function of each sensor may be directly inferred from its name by those skilled in the art, and thus a detailed description thereof will be omitted.

The memory 150 may store a program for processing and controlling the controller 110, and also may store input/output data (e.g., a plurality of objects, data on a plurality of object information areas indicating a plurality of objects, order information of a plurality of objects, additional information of a plurality of objects, etc.).

The memory 150 may include at least one storage medium among a flash memory type memory, a hard disk type memory, a multimedia card micro type memory, a card type memory (e.g., an SD or XD memory), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disc. Also, the device 100 for displaying an object may operate a web storage device or a cloud server that performs a storage function of the memory 150 over the Internet.

Programs stored in the memory 150 may be classified into a plurality of modules according to their functions and, for example, may be classified into a user interface (UI) module 151, a touch screen module 152, a notification module 153, etc.

The UI module 151 may provide an application-specific UI, a graphic user interface (GUI), or the like that is linked with the device 100 for displaying an object. The touch screen module 152 may detect a user's touch gesture on a touch screen and deliver information regarding the touch gesture to the controller 110. The touch screen module 152 according to an embodiment of the present invention may recognize and analyze a touch code. The touch screen module 152 may also be configured as separate hardware including a controller.

Various sensors may be provided inside or near the touch screen to detect a touch or a proximity touch on the touch screen. An example of a sensor for detecting a touch on a touch screen is a tactile sensor. A tactile sensor refers to a sensor for detecting a contact of a specific object to such a degree that a human may feel the contact with the specific object or to a higher degree. The tactile sensor may detect various types of information such as a roughness of a contact surface, a hardness of a contact object, a temperature at a contact point, etc.

Also, an example of a sensor for detecting a touch on a touch screen is a proximity sensor. Meanwhile, the proximity sensor may be used to detect a hovering input.

A proximity sensor refers to a sensor for detecting an object that is approaching a predetermined detection surface or a neighboring object without mechanical contact by using electromagnetic force or infrared light. Examples of the proximity sensor include a transmissive photoelectric sensor, a direct reflective photoelectric sensor, a mirror reflective photoelectric sensor, a high-frequency oscillation proximity sensor, a capacitive proximity sensor, a magnetic proximity sensor, and an infrared proximity sensor. Examples of a user's touch gesture may include a tap, a touch and hold, a double tap, a drag, a pan, a flick, a drag and drop, a swipe, etc. Also, a user input may be identified by determining a position at which a hovering input is detected through the proximity sensor.

The device according to the present invention may include a processor, a memory for storing and executing program data, a permanent storage such as a disk drive, a communication port for handling communication with external devices, and a user interface device such as a touch panel, keys, and buttons. The methods may be implemented as software modules or algorithms, and may be stored as program instructions or computer-readable codes executable on the processor on a computer-readable recording medium. Here, examples of the computer-readable recording medium include a magnetic storage medium (e.g., a ROM, a RAM, a floppy disk, or a hard disk), and optical recording media (e.g., a compact disc (CD)-ROM or a digital versatile disc (DVD)). The computer-readable recording medium may be distributed over network-coupled computer systems so that the computer-readable code may be stored and executed in a distributed fashion. The computer-readable recording medium may be read by the computer, stored in the memory, and executed by the processor.

All references including publications, patent applications, and patents cited herein are hereby incorporated by reference to the same extent as if each reference were individually and specifically indicated to be incorporated by reference and were set forth in its entirety herein.

For the purpose of promoting an understanding of the invention, reference has been made to the preferred embodiments illustrated in the drawings, and specific language has been used to describe these embodiments. However, no limitation of the scope of the invention is intended by this specific language, and the invention should be construed to encompass all embodiments that would normally occur to one of ordinary skill in the art.

The invention may be described in terms of functional blocks and various processing steps. Such functional blocks may be realized by any number of hardware and/or software components configured to perform specific functions. For example, the invention may employ various integrated circuit components, e.g., memory elements, processing elements, logic elements, look-up tables, and the like, which may carry out a variety of functions under the control of one or more microprocessors or other control devices. Similarly, where the elements according to the present invention are implemented using software programming or software elements, the invention may be implemented with any programming or scripting language, such as C, C++, Java, or assembler, with various algorithms being implemented with any combination of data structures, objects, processes, routines or other programming elements. Functional aspects may be implemented in algorithms that execute on one or more processors. Furthermore, the invention could employ any number of conventional techniques for electronics configuration, signal processing and/or control, data processing, and the like. The terms "mechanism," "element," "means," and "configuration" are broadly used, and are not limited to mechanical and physical embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software, and other functional aspects of the systems may not be described in detail. Furthermore, the connecting lines, or connectors shown in various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the invention unless the element is specifically described as "essential" or "critical."

The use of the terms "a" and "an" and "the" and similar referents in the context of describing the invention (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein can be performed in any suitable order unless otherwise indicated herein or otherwise clearly contradicted by context. The invention is not limited to the described order of the steps. The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those skilled in this art without departing from the spirit and scope of the invention.

## Claims

1. A method of displaying an object on a device, the method comprising:
specifying a first object displayed on a screen from among a plurality of objects including order information;
displaying, on the screen, a second object corresponding to an object information area selected from among a plurality of object information areas indicating the plurality of objects displayed together with the first object based on the order information; and
changing an object displayed on the screen to the specified first object when a return input for the specified first object is received.

2. The method of claim 1, wherein among the plurality of object information areas, an object information area indicating an object having order information with a higher rank than that of the first object is displayed at a first side of the screen, and an object information area indicating an object having order information with a lower rank than that of the first object is displayed at a second side of the screen.

3. The method of claim 1, wherein the number of object information areas displayed on the screen is determined based on a length of a drag input received from a user.

4. The method of claim 1, further comprising:
receiving a sorting input for selecting any one piece of the order information of the objects; and
displaying the selected order information in the plurality of object information areas based on the received sorting input.

5. The method of claim 4, wherein the displaying comprises displaying the order information of the plurality of objects based on hierarchical information between the plurality of objects included in the order information.

6. The method of claim 1, further comprising:
determining a side at which a ratio of at least one of an image, text, and a video to the screen on which the first object is displayed is less than or equal to a predetermined value; and
displaying the plurality of object information areas indicating the plurality of objects at the determined side.

7. The method of claim 1, wherein:
the specifying of a first object comprises creating marking information for the first object when a first input is received for a predetermined time or longer; and
the displaying of a second object comprises:
receiving a second input for selecting any one of the plurality of object information areas indicating the plurality of objects together with the first input received for the predetermined time or longer; and
displaying a second object selected based on the received second input.

8. A device for displaying an object, the device comprising:
a controller configured to specify a first object displayed on a screen from among a plurality of objects including order information and select any one object information area from among a plurality of object information areas indicating the plurality of objects displayed together with the first object based on the order information;
a display configured to display a second object corresponding to the selected object information area; and
an input/output unit configured to receive a return input for the specified first object,
wherein the controller changes an object displayed on the screen to the specified first object when the return input is received.

9. The device of claim 8, wherein the display displays an object information area indicating an object having order information with a higher rank than that of the first object at a first side of the screen and displays an object information area indicating an object having order information with a lower rank than that of the first object at a second side of the screen.

10. The device of claim 8, wherein the number of object information areas displayed on the screen is determined based on a length of a drag input received from a user.

11. The device of claim 8, wherein:
the input/output unit receives a sorting input for selecting any one piece of the order information of the objects; and
the display displays the order information of the plurality of objects in the plurality of object information areas based on the received sorting input.

12. The device of claim 11, wherein the display displays the order information of the plurality of objects based on hierarchical information between the plurality of objects included in the order information.

13. The device of claim 8, wherein:
the controller determines a side at which a ratio of at least one of an image, text, and a video to the screen on which the first object is displayed is less than or equal to a predetermined value; and
the display displays the plurality of object information areas at the determined side.

14. The device of claim 8, wherein:
the controller creates marking information for the first object when a first input is received for a predetermined time or longer;
the input/output unit receives a second input for selecting any one of the plurality of object information areas together with the first input received for the predetermined time or longer; and
the display displays a second object selected based on the received second input.

15. A computer-readable recording medium having a computer program recorded thereon to execute the method of claim 1.
